# EUROPÄISCHE PATENTSCHRIFT

(11) **EP 0 695 786 B1**
(45) Veröffentlichungstag und Bekanntmachung des Hinweises auf die Patenterteilung: **08.03.2000**
(21) Anmeldenummer: 95111218.4
(22) Anmeldetag: 18.07.1995
(51) Int. Cl.: C08L 75/04, C08K 5/12, C08K 5/42, C08J 5/18, C08G 18/66

(54) **Polyurethan-Formmassen**
Polyurethane moulding compositions
Matière moulable à base de polyuréthane

(30) Priorität: 29.07.1994 DE 4426943
(43) Veröffentlichungstag der Anmeldung: 07.02.1996
(73) Patentinhaber: BAYER AG, 51368 Leverkusen (DE)
(72) Erfinder: Hoppe, Hans-Georg, D-42799 Leichlingen (DE); Winkler, Jürgen, D-40764 Langenfeld (DE); Wussow, Hans-Georg, Dr., D-40597 Düsseldorf (DE); Bräuer, Wolfgang, Dr., D-51375 Leverkusen (DE); Müller, Friedemann, Dr., D-41470 Neuss (DE)

(56) Entgegenhaltungen:
- EP-B- 0 134 455
- US-A- 4 349 640
- J. FALBE (Hrsg.) et al. "R!mpp Chemie Lexikon", 9. Auflage, Band 4, 1991, Stuttgart/New York, GEORG THIEME VERLAG, Seite 2699 * "Mesamoll" *

## Beschreibung

Die Erfindung betrifft weiche thermoplastische Polyurethan-Elastomer-Massen mit deutlich verbessertem Entformungsverhalten auf Basis von thermoplastischen Polyurethanen (TPU's), anorganischen Füllstoffen und wenigstens einem speziellen Weichmacher.

In der EP 0 134 455 wird gezeigt, daß durch die Verwendung von Phthalsäure-dimethoxy-ethylester, Trikresylphosphat und/oder Diphenylkresylphosphat TPU's mit einer Härte von 60 bis 80 Shore A erhalten werden.

Gegenstand dieser Erfindung sind sehr weiche gummielastische und thermoplastisch verarbeitbare Formmassen mit deutlich verbessertem Entformungsverhalten, welche
A) 15 - 90 Gew.-Teile eines thermoplastischen Polyurethans, hergestellt aus
   1) organischem Diisocyanat
   2) Mischungen aus Polypropylenoxid oder Polypropylen/ethylenoxid mit Polyester aus aliphatischen Dicarbonsäuren mit C₂-C₆-Diol mit Molekulargewicht von 500 bis 5 000
   3) einem kettenverlängernden Diol mit Molekulargewicht von 60 bis 400,
B) 5 - 50 Gew.-Teilen anorganischen Füllstoffen,
C) 5 - 35 Gew.-Teilen Alkylsulfonsäureester des Phenols (DIN 7723: ASE) und/oder Benzylbutylphthalat (DIN 7723: BBP)
enthalten.

Der Bestandteil A) der erfindungsgemäßen Formmasse ist ein spezielles, prinzipiell bekanntes thermoplastisches Polyurethan-Elastomer. Thermoplastische Polyurethan-Elastomere, im allgemeinen kurz als TPU bezeichnet, werden aus Polyolen, d.h. Polyethern oder Polyestern höheren Molekulargewichts, organischen Diisocyanaten und kurzkettigen Diolen als Kettenverlängerer aufgebaut. Verschiedene Herstellungsverfahren sind bekannt und werden großtechnisch genutzt.

Den erfindungsgemäß eingesetzten TPUs liegen aliphatische, cycloaliphatische, araliphatische, heterocyclische oder aromatische Diisocyanate zugrunde, wie sie z.B. in Justus Liebigs Annalen der Chemie, 562, Seiten 75-136, beschrieben sind. Im einzelnen seien beispielhaft genannt: aliphatische Diisocyanate, wie Hexamethylendiisocyanat, cycloaliphatische Diisocyanate, wie Isophorondiisocyanat, 1,4-Cyclohexandiisocyanat, 1-Methyl-2,4- und -2,6-cyclohexandiisocyanat sowie die entsprechenden Isomerengemische, 4,4'-, 2,4'- und 2,2'-Dicyclohexylmethandiisocyanat sowie die entsprechenden Isomerengemische und aromatische Diisocyanate, wie 2,4-Toluylendiisocyanat, Gemische aus 2,4- und 2,6-Toluylendiisocyanat, 4,4'-, 2,2'- und 2,2'-Diphenylmethandiisocyanat, Gemische aus 2,4'- und 4,4'-Diphenylmethandiisocyanat, urethanmodifizierte flüssige 4,4'- und/oder 2,4'-Diphenylmethandiisocyanate, 4,4'-Diisocyanatodiphenylethan-(1,2)- und 1,5-Naphthylendiisocyanat. Vorzugsweise verwendet werden 1,6-Hexamethylendiisocyanat, Isophorondiisocyanat, Dicyclohexylmethandiisocyanat, Diphenylmethandiisocyanat-Isomerengemische mit einem 4,4'-Diphenylmethandiisocyanatgehalt von größer als 96 Gew.-% und insbesondere 4,4'-Diphenylmethandiisocyanat und 1,5-Naphthylendiisocyanat. Die genannten Diisocyanate können zusammen mit bis zu 15 % (berechnet auf Diisocyanat), aber höchstens soviel eines Polyisocyanates, daß ein unvernetztes Produkt entsteht, verwendet werden. Beispiele sind Triphenylmethan-4,4'-4"-triisocyanat und Polyphenyl-polymethylen-polyisocyanate.

Den erfindungsgemäßen TPUs liegen als längerkettige Polyole Mischungen aus Polypropylenoxid oder Polypropylen/ethylenoxid mit Polyester aus aliphatischen Dicarbonsäuren und C₂-C₆-Diol, insbesondere 1,4-Butandiol, mit Molekulargewicht von 500 bis 5 000, zugrunde.

Die Polyetherole haben ebenfalls Molekulargewichte von 500 bis 5 000. Als Polyester gelangen vorzugsweise Adipate zum Einsatz.

Als Kettenverlängerungsmittel mit den Molekulargewichten von 60 bis 400 kommen vorzugsweise aliphatische Diole mit 2 bis 14 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bisethylenglykol oder -butandiol-1,4, Hydroxyalkylenether des Hydrochinos, wie z.B. 1,4-Di(β-hydroxyethyl)-hydrochinon, (cyclo)aliphatische Diamine, wie z.B. Isophoron-diamin, Ethylendiamin, 1,2-, 1-3-Propylen-diamin, N-Methyl-propylendiamin-1,3, N,N'-Dimethyl-ethylen-diamin und aromatische Diamine, wie z.B. 2,4-und 2,6-Toluylen-diamin, 3,5-Diethyl-2,4- und /oder -2,6-toluylen-diamin und primäre ortho-di, tri- und/oder tetraalkylsubstituierte 4,4'-Diaminodiphenylmethane. Es können auch Gemische der oben genannten Kettenverlängerer eingesetzt werden.

Zur Herstellung der TPUs können die Aufbaukomponenten, gegebenenfalls in Gegenwart von Katalysatoren, Hilfsmitteln und/oder Zusatzstoffen, in solchen Mengen zur Reaktion gebracht werden, daß das Äquivalenz-Verhältnis von NCO-Gruppen zur Summe der NCO reaktiven Gruppen, insbesondere der OH-Gruppen, der niedermolekularen Diole und der Polyole 0,9:1 bis 1,2:1, bevorzugt 0,95:1 bis 1,1:1 beträgt.

Die Herstellung von TPUs ist an sich bekannt und beispielsweise in DE-A 2 302 564 oder GB 1 057 018 beschrieben.

Anorganische Füllstoffe B sind beispielsweise Kalziumcarbonat, Bariumsulfat, Siliziumoxid, Magnesiumoxid, Antimonoxid oder deren Gemische. Besonders bevorzugt sind Kalziumcarbonat und Bariumsulfat, gegebenenfalls in Verbindung mit Siliziumdioxid, wie z.B. in Form von Kieselsäuren und insbesondere, eine Mischung von 15 bis 35 Gew.-Teilen Kalziumcarbonat mit 1 bis 10 Gew.Teilen Siliziumdioxid.

Geeignete Weichmacher C sind Alkylsulfonsäureester des Phenols (ASE) und Benzylbutylphthalate (BBP) und Mischungen daraus.

Besonders geeignete Alkylsulfonsäureester des Phenols enthalten Alkylgruppen mit 10 bis 20 Kohlenstoffatomen. Häufig handelt es sich um Gemische verschiedener Alkylgrupen mit im Mittel 10 bis 14 Kohlenstoffatomen.

Die erfindungsgemäßen Formmassen können hergestellt werden, indem man die Bestandteile nach bekannten Methoden batchweise vormischt (A+B+C z.B im Schnellmischer) und anschließend auf bekannten Aggregaten (Kneter, Extruder) compoundiert.

Die Mitverwendung von Siliziumdioxid als Füllstoff ist hierbei zur Mischungsherstellung eine besondere Ausführungsform der Erfindung. Durch das Siliziumdioxid, insbesondere in Form von Kieselsäure, wird eine trockene und dosierfähige Mischung erhalten.

Zur kontinuierlichen Herstellung der Formmassen ist es auch möglich in die oben erwähnten Aggregate (Extruder) die Einzelkomponenten direkt ohne Vormischung über geeignete Dosiervorrichtungen zu geben, wobei der Weichmacher vorzugsweise in das schon aufgeschmolzene TPU bzw. TPU-Füllstoffgemisch eindosiert wird.

Es ist ebenfalls möglich, Füllstoff und Weichmacher während der Herstellung des TPU, d.h. in die noch nicht vollständig ausreagierte Reaktionsmischung zu geben.

Die erfindungsgemäßen Formmassen sind sehr weich (Shore A 55 bis 85) und weisen auch bei nur 50 % TPU-Anteil mechanische Eigenschaften auf, die mit vielen Weich-PVC-Mischungen und anderen thermoplastischen Elastomer-Compounds vergleichbar sind. Aufgrund des ausgezeichneten Kristallisationsvermögens aus der Schmelzeverarbeitung, der geringen Klebrigkeit im Formwerkzeug und der niedrigen Schwindungswerte der Formkörper besitzen die aus den erfindungsgemäßen Formmassen hergestellten Artikel ein deutlich verbessertes Entformungsverhalten bei der thermoplastischen Verarbeitung. Sie kommen daher besonders als Alternativprodukte zu Weich-PVC-Compounds in Betracht.

Damit eignen sie sich insbesondere zur Herstellung von weichen Spritzgießartikeln aber auch für Blasformteile und Extrudate.

### Beispiele

In den folgenden Beispielen wurden folgende Substanzen verwendet:
- TPU 1 =: Polyether-Esterurethan-Elastomer auf Basis
50 Gew.-Teile Polypropylenoxidether MG ca. 2 000
50 Gew.-Teile Polybutandioladipat MG ca. 2 000
10,5 Gew.-Teile Butandiol-1,4
42 Gew.-Teile Diphenylmethandiisocyanat
- TPU 2 =: Polyesterurethan-Elastomer auf Basis
100 Gew.-Teile Polybutandioladipat MG ca. 2 000
10,5 Gew.-Teile Butandiol-1,4
40 Gew.-Teile Diphenylmethandiisocyanat
- TPU 3 =: Polyetherurethan-Elastomer auf Basis
100 Gew.-Teile Polytetramethylenoxidether MG ca. 1 000
10 Gew.-Teile Butandiol-1,4
50 Gew.-Teile Diphenylmethandiisocyanat

- Omyacarb 10 BG: = Kalziumcarbonat der Fa. Omya
- Aerosil 200 V: = Siliziumdioxid der Fa. Degussa
- Mesamoll 2: = Alkylsulfonsäureester des Phenols der Fa. Bayer (DIN 7723: ASE)
- Disflamoll TKP: = Trikresylphosphat der Fa. Bayer (DIN 7723: TCF)
- Vestinol AH: = Dioctylphthalat der Fa. Hüls (DIN 7723:DOP)
- Unimoll BB: = Benzylbutylphthalat der Fa. Bayer (DIN 7723:BBP)

Das Kristallisationsvermögen der Produkte wird durch differential scanning calorimeter (DSC)-Messungen bestimmt.

Die DSC-Messungen wurden an einem DSC-7 der Firma Perkin Elmer folgendermaßen durchgeführt: das Produkt wird im Stickstoff-Medium von -70°C bis 260°C mit 20°C/min aufgeheizt, danach mit 40°C/min auf -70°C abgekühlt.

Dabei ist die Kristallisationstemperatur in der Abkühlphase (exothermer Peak) direkt proportional dem Kristallisationsvermögen.

### Erfindungsgemäße Beispiele 1 bis 7

Die TPU-Komponente wurde zusammen mit dem Füllstoff 1 sowie dem Füllstoff 2 und dem Weichmacher in der in Tabelle 1 ersichtlichen Mengen und Stoffzusammensetzungen in einem handelsüblichen Schnellmischer ca. 5 min bei Raumtemperatur gemischt. Das so erhaltene und dosierfähige trockene Gemisch wurde dann über einen Zweiwellenextruder compoundiert, die Stränge in einem Wasserbad abgekühlt und anschließend granuliert.

Die getrockneten Granulate konnten auf einer Spritzgießmaschine bei 195°C zu Probekörpern verarbeitet werden. Nach dem Tempern, 15 h 80°C, konnten die in Tabelle 2 aufgelisteten Eigenschaften gefunden werden

**Tabelle 1**

| Erfindungsgemäße Beispiele - Zusammensetzung | | | | | | | | |
|---|---|---|---|---|---|---|---|---|
| Beispiel Nr. | Teile | TPU | Teil e | Füllstoff 1 | Teile | Füllstoff 2 | Teile | Weichmacher |
| 1 | 50 | 1 | 20 | Omyacarb 10 BG | 5 | Aerosil 200 V | 25 | Mesamoll 2 |
| 2 | 50 | 1 | 20 | Bariumsulfat | 7,5 | Aerosil 200 V | 25 | Mesamoll 2 |
| 3 | 50 | 1 | 25 | Omyacarb 10 BG | | | 25 | Mesamoll 2 |
| 4 | 60 | 1 | 18 | Omyacarb 10 BG | 5 | Aerosil 200 V | 20 | Mesamoll 2 |
| 5 | 50 | 1 | 35 | Omyacarb 10 BG | 5 | Aerosil 200 V | 10 | Mesamoll 2 |
| 6 | 50 | 1 | 15 | Omyacarb 10 BG | 10 | Aerosil 200 V | 30 | Mesamoll 2 |
| 7 | 50 | 1 | 20 | Omyacarb 10 BG | 7,5 | Aerosil 200 V | 25 | Unimoll BB |

**Tabelle 2**

| Eigenschaften der erfindungsgemäßen Beispiele | | | | | | |
|---|---|---|---|---|---|---|
| Beispiel Nr. | Härte Shore A DIN 53505 | Reißfestigkeit (MPa) DIN 53504 | Reißdehnung (%) DIN 53504 | Schwindung nach dem Tempern (%) | Kristallisationstemperatur °C aus DSC | Bemerkung |
| 1 | 69 | 9,9 | 602 | 1,2 | 92 | gut entformbar |
| 2 | 71 | 7,5 | 580 | 0,8 | 95 | gut entformbar |
| 3 | 64 | 9,1 | 713 | 1,4 | 95 | gut entformbar |
| 4 | 73 | 8,4 | 452 | 1,2 | 87 | gut entformbar |
| 5 | 82 | 6,4 | 522 | 0,8 | 84 | gut entformbar |
| 6 | 67 | 8,1 | 602 | 1,6 | 87 | gut entformbar |
| 7 | 70 | 5,7 | 495 | 1,2 | 81 | gut entformbar |

### Vergleichsbeispiele 8 bis 15

### Beispiel 8

Hier handelt es sich um reines TPU 1; die ermittelten Kenndaten sind in Tabelle 4 aufgeführt.

### Beispiel 9 bis 11

Die TPU-Komponenten wurde zusammen mit der Weichmacherkomponente in der in Tabelle 3 ersichtlichen Mengen und Stoffzusammensetzungen in einem Taumelmischer ca. 24 h bei RT gemischt. Das so weichgemachte Granulat wurde dann wie in den erfindungsgemäßen Beispielen verarbeitet. Die Kenndaten sind Tabelle 4 zu entnehmen. Bei der Verarbeitung zu Probekörpern war ein Kleben der Probekörper in der Spritzgießform zu beobachten.

### Beispiele 12 bis 15

Die TPU-Komponente wurde zusammen mit dem Füllstoff 1 sowie dem Füllstoff 2 und dem Weichmacher in der in Tabelle 3 ersichtlichen Mengen und Stoffzusammensetzung in einem handelsüblichen Schnellmischer ca. 5 min. bei Raumtemperatur gemischt. Die Compoundierung und Weiterverarbeitung zu Probekörpern erfolgte analog den Beispielen 1 bis 7. Die ermittelten Daten sind in Tabelle 4 gelistet.

**Tabelle 3**

| **Vergleichsbeispiele** - Zusammensetzung | | | | | | | | |
|---|---|---|---|---|---|---|---|---|
| Beispiel Nr. | Teile | TPU | Teile | Füllstoff 1 | Teile | Füllstoff 2 | Teile | Weichmacher |
| 8 | 100 | 1 | | | | | | |
| 9 | 75 | 1 | | | | | 25 | Mesamoll 2 |
| 10 | 75 | 2 | | | | | 25 | Disflamoll TKP |
| 11 | 75 | 3 | | | | | 25 | Disflamoll TKP |
| 12 | 50 | 3 | 20 | Omyacarb 10 BG | 5 | Aerosil 200 V | 25 | Mesamoll 2 |
| 13 | 50 | 2 | 20 | Omyacarb 10 BG | 5 | Aerosil 200 V | 25 | Mesamoll 2 |
| 14 | 50 | 1 | 20 | Omyacarb 10 BG | 5 | Aerosil 200 V | 25 | Disflamoll TKP |
| 15 | 50 | 1 | 20 | Omyacarb 10 BG | 5 | Aerosil 200 V | 25 | Vestinol AH |

**Tabelle 4**

| **Vergleichsbeispiel-Eigenschaften** | | | | | | |
|---|---|---|---|---|---|---|
| Beispiel Nr. | Härte Shore A DIN 53505 | Reißfestigkeit (MPa) DIN 53504 | Reißdehnung (%) DIN 53504 | Schwindung nach dem Tempern (%) | Kristallisationstemperatur °C aus DSC | Bemerkung |
| 8 | 80 | 32,5 | 599 | 3,6 | 74 | |
| 9 | 65 | 15 | 800 | 2,8 | 97 | klebt in Form |
| 10 | 60 | 27,2 | 602 | 2,4 | 55 | klebt in Form |
| 11 | 72 | 25,6 | 602 | 1,6 | 70 | klebt in Form |
| 12 | 82 | 6,4 | 522 | 2,4 | 80 | |
| 13 | 74 | 17,3 | 599 | 1,2 | 77 | WM schwitzt stark aus |
| 14 | 72 | 5,2 | 483 | 0,8 | 72 | WM schwitzt etwas aus |
| 15 | 69 | 4,7 | 369 | 2,0 | 74 | WM schwitzt stark aus |

Der Vergleich der Eigenschaften der erfindungsgemäßen Beispiele 1 bis 7 mit denen der aus der Literatur bekannten Vergleichsbeispielen 8 bis 15 zeigt deutlich, daß die Eigenschaftskombination "weich mit ausreichenden mechanischen Eigenschaften bei sehr gutem Entformungsverhalten" nur bei den erfindungsgemäßen Beispielen gegeben ist.

Bei den Vergleichsbeispielen sind entweder

die Schwindungswerte zu hoch (Beispiel 8, 9, 10, 12, 15) die Kristallisationstemperaturen zu niedrig (Beispiel 8, 10, 11, 13, 14, 15) oder sie schwitzen den Weichmachern wieder aus bzw. kleben (Beispiel 9, 10, 11, 13, 14, 15).

## Patentansprüche

1. Thermoplastische Formmasse aus
A) 15-90 Gew.-Teilen eines thermoplastischen Polyurethans hergestellt aus
1) organischem Diisocyanat,
2) Mischungen aus Polypropylenoxid oder Polypropylen/ethylenoxid mit Polyester aus aliphatischen Dicarbonsäuren mit C₂-C₆-Diol mit Molekulargewicht von 500 bis 5 000
3) einem kettenverlängernden Diol mit Molekulargewicht von 60 bis 400,
B) 5 - 50 Gew.-Teilen anorganischen Füllstoffen,
C) 5 - 35 Gew.-Teilen Alkylsulfonsäureester des Phenols und/oder Benzylbutylphthalat.

2. Formmassen nach Anspruch 1, worin A) ein thermoplastisches Polyurethan aus
1) organischem Diisocyanat
2) Mischungen aus Polypropylenoxid mit einem Polyester aus Adipinsäure mit einem C₂₋C₆-Diol mit Molekulargewicht von 500 bis 5 000
3) einem kettenverlängernden Diol mit Molekulargewicht von 60 bis 400,
B) eine Mischung aus 15 bis 35 Gew.-Teilen Kalziumcarbonat und/oder Bariumsulfat und gegebenenfalls 1,0 bis 10 Gew.-Teilen Siliciumdioxid ist.

## Claims

1. A thermoplastic moulding composition comprising
A) 15 - 90 parts by weight of a thermoplastic polyurethane produced from
1) organic diisocyanate,
2) mixtures of polypropylene oxide or polypropylene/ethylene oxide with polyesters of aliphatic dicarboxylic acids and a C₂₋₆ diol with a molecular weight of 500 to 5000,
3) a chain-extending diol with a molecular weight of 60 to 400,
B) 5 - 50 parts by weight of inorganic fillers and
C) 5 - 35 parts by weight of alkyl sulphonic acid esters of phenol and/or benzyl butyl phthalate.

2. Moulding compositions according to claim 1, wherein A) is a thermoplastic polyurethane produced from
1) organic diisocyanate,
2) mixtures of polypropylene oxide with a polyester of adipic acid and a C₂₋₆ diol with a molecular weight of 500 to 5000.
3) a chain-extending diol with a molecular weight of 60 to 400.
and
B) is a mixture of 15 to 35 parts by weight of calcium carbonate and/or barium sulphate and optionally 1.0 to 10 parts by weight of silica.

## Revendications

1. Matières moulables thermoplastiques composées de :
A) 15 à 90 parties en poids d'un polyuréthanne thermoplastique, préparé à partir de :
1) un diisocyanate organique,
2) des mélanges de poly(oxyde de propylène) ou de poly(oxyde de propylène/éthylène) avec un polyester de diacide carboxylique aliphatique avec un diol en C₂-C₆, ayant un poids moléculaire moyen allant de 500 à 5000, et
3) un diol d'allongement de chaine avec un poids moléculaire allant de 60 à 400 ;
B) 5 à 50 parties en poids de charges inorganiques, et
C) 5 à 35 parties en poids d'un ester alcoylsulfonique du phénol et/ou de phtalate de benzyle et de butyle.

2. Matières moulables suivant la revendication 1, où A) est un polyuréthanne thermoplastique provenant de :
1) un diisocyanate organique,
2) des mélanges de poly(oxyde de propylène) avec un polyester d'acide adipique avec un diol en C₂-C₆, ayant un poids moléculaire moyen allant de 500 à 5000, et
3) un diol d'allongement de chaine avec un poids moléculaire allant de 60 à 400 ;
B) est un mélange de 15 à 35 parties en poids de carbonate de calcium et/ou de sulfate de baryum et facultativement, 1,0 à 10 parties en poids de dioxyde de silicium.
